(19) Europäisches Patentamt / European Patent Office / Office européen des brevets

(11) **EP 3 908 478 B1**

(12) **FASCICULE DE BREVET EUROPÉEN**

(45) Date de publication et mention
de la délivrance du brevet:
**03.09.2025 Bulletin 2025/36**

(21) Numéro de dépôt: **19817756.0**

(22) Date de dépôt: **16.12.2019**

(51) Classification Internationale des Brevets (IPC):
**B60L 53/64** (2019.01)     **B60L 58/12** (2019.01)
**B60L 53/66** (2019.01)     **B60L 53/63** (2019.01)

(52) Classification Coopérative des Brevets (CPC):
**B60L 53/64; B60L 53/63; B60L 53/665;**
**B60L 58/12;** B60L 2240/545; B60L 2240/80;
B60L 2260/54; B60L 2260/56; B60L 2260/58;
Y02E 60/00; Y02T 10/70; Y02T 10/7072;
Y02T 90/12; Y02T 90/16; Y02T 90/167;     (Cont.)

(86) Numéro de dépôt international:
**PCT/EP2019/085387**

(87) Numéro de publication internationale:
**WO 2020/144007 (16.07.2020 Gazette 2020/29)**

(54) **MÉTHODE DE CHARGE D'UNE BATTERIE D'ACCUMULATEURS PAR UNE BORNE DE CHARGE**

VERFAHREN ZUM LADEN EINER AKKUMULATORENBATTERIE DURCH EINE LADEKLEMME

METHOD FOR CHARGING AN ACCUMULATOR BATTERY THROUGH A CHARGING TERMINAL

(84) Etats contractants désignés:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priorité: **10.01.2019 FR 1900244**

(43) Date de publication de la demande:
**17.11.2021 Bulletin 2021/46**

(73) Titulaire: **Ampere SAS**
**92100 Boulogne-Billancourt (FR)**

(72) Inventeurs:
• **ASTORG, Marine**
**75015 Paris (FR)**

• **DREUMONT, Thomas**
**78180 Montigny le bretonneux (FR)**
• **SZEWCZYK, Arnaud**
**75015 Paris (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**EP-A1- 2 662 949          EP-A1- 2 990 257**
**WO-A2-2009/012018     DE-A1- 102016 107 271**
**US-A1- 2013 278 225     US-A1- 2013 307 466**
**US-A1- 2016 047 862     US-A1- 2017 259 683**

(52) Classification Coopérative des Brevets (CPC):
(Cont.)Y04S 10/126; Y04S 30/14

**Description**

DOMAINE TECHNIQUE DE L'INVENTION

La présente invention concerne de manière générale la charge des batteries d'accumulateurs des véhicules à propulsion électrique.

L'invention concerne plus spécifiquement une méthode de charge, au moyen d'une borne de charge, d'une batterie d'accumulateurs qui équipe un véhicule automobile.

Elle concerne également un véhicule automobile conçu pour mettre en œuvre cette méthode de charge.

Elle s'applique plus particulièrement aux voitures à propulsion entièrement électrique.

ETAT DE LA TECHNIQUE

Une voiture à propulsion électrique comporte de façon ordinaire une batterie d'accumulateurs de grande capacité, permettant d'alimenter en courant des moteurs électriques prévus pour propulser le véhicule.

Une telle batterie d'accumulateurs doit être régulièrement rechargée. Pour cela, une solution consiste à brancher électriquement la voiture à une borne de charge publique.

La norme ISO 15118 a alors été développée pour définir un protocole de communication standard entre une borne de charge et toute voiture qui est susceptible de s'y brancher.

Pour optimiser la gestion de l'énergie électrique, cette norme doit être utilisée de façon à répondre à trois contraintes majeures. La première contrainte consiste à assurer à l'usager d'avoir sa batterie suffisamment chargée au moment où il souhaite repartir. La seconde contrainte consiste à ne pas surestimer les besoins de l'usager pour ne pas monopoliser inutilement la puissance disponible au niveau de la borne de charge. La troisième contrainte consiste à imposer, après le branchement de la voiture à la borne de charge, un délai assez court à la voiture à l'issu duquel elle devra communiquer à la borne de charge quand et avec quelle puissance électrique la batterie d'accumulateurs devra être chargée.

Le protocole utilisé prévoit que la borne de charge transmette, au moment du branchement du véhicule automobile, des informations concernant l'évolution au cours du temps de la puissance électrique disponible sur la borne de charge et du niveau de prix de l'électricité (typiquement, une information de type heure creuse / heure pleine).

Une méthode connue de sélection des créneaux horaires pendant lesquels la borne de charge devra recharger la batterie consiste alors à sélectionner les créneaux horaires en heure creuse les plus proches.

Cette méthode ne permet malheureusement d'assurer à l'usager que son véhicule soit prêt à partir à l'heure souhaitée.

Pour remédier à cet inconvénient, une solution pourrait être de demander à l'usager l'heure à laquelle il souhaite repartir, et de sélectionner des créneaux horaires de façon à ce que le coût de la recharge soit le plus réduit possible et que le véhicule soit suffisamment rechargé à l'heure du départ.

Cette solution nécessiterait toutefois que le véhicule soit en mesure de prévoir la progression de l'état de charge de la batterie en fonction des créneaux horaires sélectionnés et des puissances électriques disponibles pendant chacun de ces créneaux horaires.

On connaît pour cela du document CN103020445 une méthode de calcul de la progression de l'état de charge d'une batterie, qui nécessite toutefois d'utiliser un calculateur ayant une grosse puissance de calcul de manière à pouvoir déterminer dans le temps imparti par la norme ISO 15118 quels créneaux horaires retenir et quelle puissance électrique réserver. Cette solution s'avère ainsi très onéreuse à mettre en oeuvre. Voir également les documents US2017/259683A1, US2013/278225A1 et US2013/307466.

Cette méthode n'est en outre pas utilisable si le coût de l'électricité varie au cours d'un même créneau horaire, en fonction de la puissance électrique consommée (le coût du kilowattheure pouvant par exemple être d'autant plus élevé que la puissance électrique consommée au cours de ce créneau horaire est grande).

PRESENTATION DE L'INVENTION

On cherche ainsi une solution moins onéreuse à mettre en œuvre et qui permette de tenir compte du fait qu'à chaque créneau horaire, le coût de l'énergie peut varier selon la puissance électrique consommée.

Plus particulièrement, on propose selon l'invention une méthode de charge d'une batterie d'accumulateurs (12) équipant un véhicule automobile (10) qui est connecté électriquement à une borne de charge (20),
ladite méthode comportant une étape d'acquisition de données relatives à l'évolution au cours du temps de la puissance électrique disponible ($P_{20}$) sur la borne de charge (20) et du coût ($c_{i,j}$) de l'électricité, lesdites données étant discrétisées par créneaux horaires ($T_i$) dans une partie au moins desquels il est prévu plusieurs tranches de puissance associées chacune à un coût de l'électricité distinct,
caractérisée en ce que la méthode comporte les étapes suivantes :

- la sélection d'une tranche de puissance d'un créneau horaire (c1.1), qui est associée à un coût de l'électricité minimum, si le coût de l'électricité est minimum pour plusieurs tranches de puissance appartenant à plusieurs créneaux horaires (T1.1, T2.2, T7.1) différents, la tranche de puissance sélectionnée est celle appartenant au créneau horaire (T1.1) le plus immédiat, et des étapes supplémentaires, aptes à être exécutées en boucle, à pas de temps successifs :

- d'estimation d'un niveau de charge (SOC) que présentera la batterie d'accumulateurs (12) à l'issue de sa charge, en fonction de chaque tranche de puissance sélectionnée,

- de comparaison du niveau de charge (SOC) avec un niveau de charge cible ($SOC_N$) puis,

- si le niveau de charge (SOC) est supérieur ou égal au niveau de charge cible ($SOC_N$), il est prévu de charger la batterie d'accumulateurs (12) au moyen de la borne de charge (20) en envoyant à la borne de charge une requête pour réserver chaque tranche de puissance sélectionnée, ou

- si le niveau de charge (SOC) est inférieur au niveau de charge cible ($SOC_N$), il est prévu :

  - d'ajouter à la sélection une tranche de puissance d'un créneau horaire (c2.1, c7.1, c1.2), qui est associée à un coût de l'électricité minimum et qui n'a pas été déjà sélectionnée à un pas de temps précédent, si le coût de l'électricité est minimum pour plusieurs tranches de puissance appartenant à plusieurs créneaux horaires (T2.1, T7.1) différents, la tranche de puissance sélectionnée est celle appartenant au créneau horaire (T2.1) le plus immédiat,

  - si pour le créneau horaire (T1) correspondant à la tranche de puissance qui vient d'être ajoutée à la sélection (c1.2), une autre tranche de puissance avait déjà été sélectionnée (c1.1), alors une étape de désélection de cette autre tranche de puissance (c1.1) est effectuée,

  - d'exécuter lesdites étapes supplémentaires au cours d'un nouveau pas de temps.

Ainsi, grâce à cette méthode itérative , il est possible de tenir compte du fait que le coût de l'électricité à un moment donné n'est pas le même selon la puissance électrique consommée, afin de charger la batterie de traction du véhicule en privilégiant les créneaux horaires et les tranches de puissance dans lesquelles le coût de l'électricité est le plus faible.

Cette méthode présente un avantage supplémentaire qui consiste à inciter le véhicule à stocker de l'énergie produite localement (par un panneau photovoltaïque par exemple), en affectant à la tranche de puissance électrique développée par ce panneau photovoltaïque un coût de l'énergie égal à zéro, et en affectant aux autres tranches de puissance (heures creuse / heures pleines par exemple) un coût de l'énergie bien supérieur.

D'autres caractéristiques avantageuses et non limitatives de la méthode de charge conforme à l'invention, prises individuellement ou selon toutes les combinaisons techniquement possibles, sont les suivantes :

- au cours de l'étape d'estimation, il est prévu d'évaluer une température que présentera la batterie d'accumulateurs au moment du créneau horaire et d'un niveau de charge que présentera la batterie d'accumulateurs au début du créneau horaire, de déterminer la puissance électrique que la borne de charge pourrait transmettre à la batterie d'accumulateurs pendant le créneau horaire, en fonction de la température et du niveau de charge évalués, et d'en déduire une estimation du niveau de charge ;
- l'étape d'acquisition comporte une sous-étape de réception desdites données, et une sous-étape de discrétisation desdites données par créneaux horaires de durées prédéterminées, en uniformisant la valeur du coût de l'électricité dans chaque tranche de puissance de chaque créneau horaire ;
- la durée de chaque créneau horaire est comprise entre 1 et 30 minutes, préférentiellement entre 10 et 20 minutes ;
- au cours de l'étape d'acquisition, on acquiert une heure de départ à laquelle il est prévu que le véhicule automobile soit déconnecté de la borne de charge et, à l'étape de sélection, seules sont considérées les tranches de puissance situées dans les créneaux horaires antérieurs à l'heure de départ ;
- à l'étape de sélection, si le coût de l'électricité est minimum pour plusieurs tranches de puissance appartenant à plusieurs créneaux horaires différents, la tranche de puissance sélectionnée est celle appartenant au créneau horaire le plus immédiat ;

- avant l'étape de sélection, il est prévu de déterminer le niveau de charge instantané de la batterie d'accumulateurs, de comparer le niveau de charge instantané avec un seuil de niveau de charge, et, si le niveau de charge instantané est inférieur au seuil de niveau de charge, de recharger la batterie d'accumulateurs au premier créneau horaire pour lequel la puissance électrique disponible auprès de la borne de charge est non nulle ;
- lors de la charge de la batterie d'accumulateurs au moyen de la borne de charge, il est prévu au moins une fois d'acquérir la valeur instantanée du niveau de charge de la batterie d'accumulateurs, de déterminer l'écart entre ladite valeur instantanée et la valeur attendue du niveau de charge de la batterie d'accumulateurs (ladite valeur attendue étant déduite de l'étape d'estimation), et, si l'écart dépasse un seuil prédéterminé, de réinitialiser toute la méthode de charge ;
- lorsque toute la méthode de charge est réinitialisée, l'étape d'estimation du niveau de charge que présentera la batterie d'accumulateurs à l'issue de sa charge est réalisée en utilisant un coefficient correcteur.

L'invention concerne aussi un véhicule automobile comportant au moins un moteur électrique de traction ou propulsion, et une batterie d'accumulateurs adaptée à alimenter en courant électrique chaque moteur électrique, et un calculateur programmé pour mettre en œuvre une méthode de charge telle que précitée.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :

[Fig. 1] est une vue schématique d'une borne de charge et d'un véhicule automobile conforme à l'invention ;

[Fig. 2] est un graphique illustrant un exemple d'évolution au cours du temps de la puissance électrique disponible à la borne de charge et du coût de l'électricité

[Fig. 3] est un graphique homologue de celui de la figure 2, illustrant l'évolution considérée de la puissance électrique et du coût de l'électricité après une étape de discrétisation de ces données ;

[Fig. 4] est un graphique homologue de celui de la figure 3, illustrant l'évolution considérée de la puissance électrique et du coût de l'électricité après une étape de répartition de ces données ;

[Fig. 5] est un graphique homologue de celui de la figure 4, illustrant la première tranche de puissance sélectionnée ;

[Fig. 6] est un graphique homologue de celui de la figure 4, illustrant les deux premières tranches de puissance sélectionnées ;

[Fig. 7] est un graphique homologue de celui de la figure 4, illustrant les trois premières tranches de puissance sélectionnées ;

[Fig. 8] est un graphique homologue de celui de la figure 4, illustrant les trois dernières tranches de puissance sélectionnées ;

[Fig. 9] est un graphique illustrant l'évolution de la puissance maximum que peut recevoir la batterie d'accumulateurs du véhicule représenté sur la figure 1 en fonction de son niveau de charge, ce graphique illustrant également la puissance maximum que la borne de charge peut débiter et la puissance maximum que le chargeur du véhicule automobile peut recevoir ;

[Fig. 10] est un logigramme illustrant une méthode de charge conforme à l'invention.

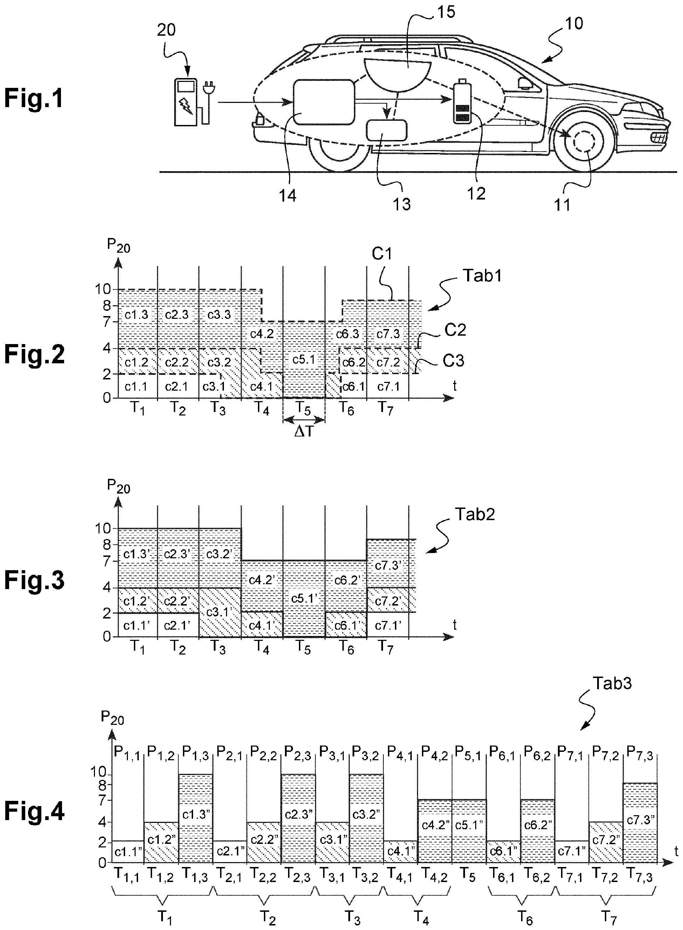

Sur la figure 1, on a représenté un véhicule automobile à propulsion électrique.

Il s'agit ici d'une voiture électrique 10 mais il pourrait s'agir d'un autre type de véhicule automobile (moto, camion, bateau...).

Cette voiture est ici qualifiée d'électrique en ce sens qu'elle ne comporte pas de moteur à combustion interne. En variante, il pourrait s'agir d'un véhicule hybride rechargeable.

La voiture électrique 10 comporte classiquement un châssis et des roues. Elle comporte plus spécifiquement ici :

- au moins un moteur électrique 11 permettant de faire avancer la voiture électrique 10,
- une batterie d'accumulateurs (ci-après appelée batterie de traction 12) connectée à chaque moteur électrique 11 pour le ou les alimenter en courant électrique,
- des appareils auxiliaires 13 consommateurs de courant électrique (climatisation, console multimédia...),
- un chargeur 14, et
- un calculateur 15.

Le chargeur 14 comporte soit une prise de courant sur laquelle peut être branchée une fiche électrique de borne de charge 20, soit une fiche électrique à brancher dans une prise de courant de la borne de charge 20.

Ce chargeur 14 est connecté à la batterie de traction 12 pour assurer sa charge. Il est également ici connecté aux appareils auxiliaires 13 de façon à pouvoir les alimenter en courant lorsque la voiture électrique 10 est branchée à la borne de charge 20.

Le calculateur 15 comporte pour sa part un processeur (CPU), une mémoire et différentes interfaces d'entrée et de sortie.

Grâce à ses interfaces d'entrée et de sortie, le calculateur est adapté à recevoir des signaux d'entrée provenant de capteurs ou d'autres appareils. Il est notamment adapté à recevoir le niveau de charge instantané $SOC_0$ de la batterie de traction 12.

Il est également adapté à communiquer avec la borne de charge 20 par l'intermédiaire du chargeur 14 pour recevoir, sous la forme d'une table Tab1 (voir figure 2), des données relatives à l'évolution au cours du temps de la puissance électrique $P_{20}$ disponible sur la borne de charge 20 et du coût $c_{i,j}$ de l'électricité.

Le calculateur est aussi adapté à communiquer avec cette même borne de charge 20 pour réserver des créneaux horaires de charge du véhicule, en sélectionnant une puissance électrique de charge.

Grâce à sa mémoire, le calculateur 15 mémorise des données utilisées dans le cadre du procédé décrit ci-dessous.

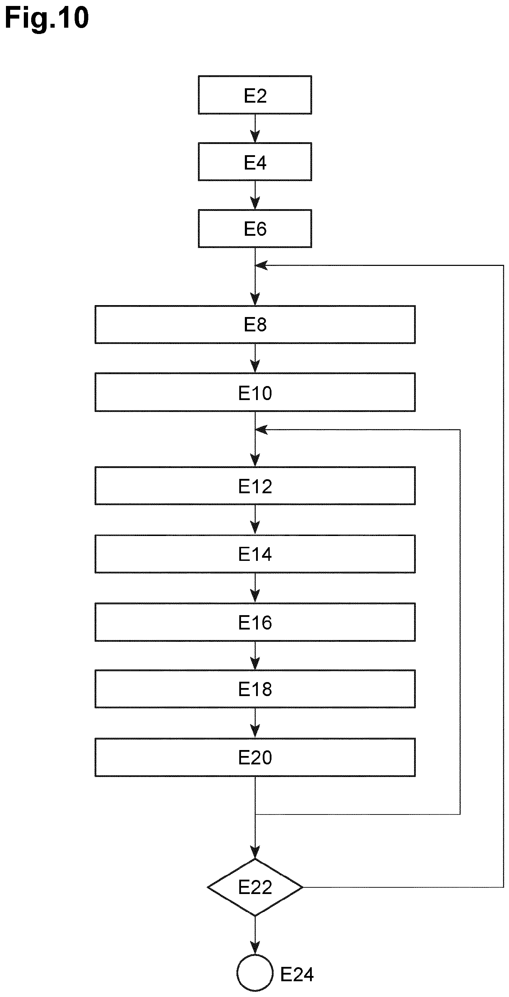

Il mémorise notamment une application informatique, constituée de programmes d'ordinateur comprenant des instructions dont l'exécution par le processeur permet la mise en œuvre par le calculateur 15 du procédé de charge illustré sur la figure 10 et décrit ci-après.

Sur la figure 2, on a donc représenté un exemple de table Tab1 pouvant être fournie par la borne de charge 20 au calculateur 15, et dont les données représentent l'évolution au cours du temps de la puissance électrique $P_{20}$ disponible sur la borne de charge 20 et du coût $c_{i,j}$ de l'électricité.

La table Tab1 reçue par le calculateur 15 représente ici cette évolution sur 24 heures. En variante, elle pourrait représenter cette évolution sur une période différente (par exemple jusqu'à l'heure de départ du véhicule).

Sur cette table, la courbe C1 représente l'évolution au cours du temps de la puissance électrique effectivement disponible sur la borne de charge 20 (cette puissance électrique étant disponible à un coût élevé).

La courbe C2 représente l'évolution au cours du temps de la puissance électrique que la borne de charge 20 peut délivrer à un coût intermédiaire.

La courbe C3 représente l'évolution au cours du temps de la puissance électrique que la borne de charge 20 peut délivrer à un coût réduit.

On constate sur cette figure que la puissance électrique effectivement disponible sur la borne de charge 20 n'est pas la même à tout instant (du fait par exemple de la réservation d'une partie de cette puissance électrique par un autre véhicule).

On constate également que pendant un intervalle de temps $\Delta T$, l'énergie électrique n'est disponible qu'à un tarif élevé.

Comme le montre la figure 10, le procédé de charge pouvant être mis en œuvre par le calculateur 15 pour assurer la charge de la batterie de traction 12 par la borne de charge 20 comporte douze étapes principales, dont certaines peuvent être répétées en boucles, au cours de pas de temps successifs.

Ce procédé itératif est spécialement conçu pour permettre la charge de la batterie de traction 12 à des créneaux horaires qui assurent à l'usager que la batterie de traction 12 de son véhicule électrique 10 sera suffisamment rechargée lorsqu'il en aura besoin et qui permettent de réduire au maximum le coût de cette charge.

Ce procédé est automatiquement initié lors du branchement de la voiture électrique 10 sur la borne de charge 20.

La première étape E2 de ce procédé consiste à vérifier que la batterie de traction 12 n'est pas excessivement déchargée, ce qui risquerait de provoquer une usure prématurée de cette batterie et/ou ce risquerait d'empêcher l'usager de pouvoir utiliser son véhicule rapidement, en cas d'imprévu.

Pour cela, au cours de cette première étape E2, le calculateur 15 relève le niveau de charge instantané $SOC_0$ de la batterie de traction 12. Ce niveau de charge instantané $SOC_0$ est ici transmis au calculateur 15 par un processeur tiers qui est en charge du calcul de ce niveau de charge. En variante, il pourrait être calculé par le calculateur 15, en fonction de la tension aux bornes de la batterie de traction 12.

Le calculateur 15 compare ensuite ce niveau de charge instantané $SOC_0$ avec un seuil de niveau de charge $SOC_{min}$ prédéterminé, invariable et enregistré dans sa mémoire morte. Ce seuil de niveau de charge $SOC_{min}$ est de préférence compris entre 10% et 30%. Il est ici égal à 20%.

Si le niveau de charge instantané $SOC_0$ est supérieur ou égal au seuil de niveau de charge $SOC_{min}$, ce qui signifie qu'aucun risque d'usure prématurée de la batterie de traction 12 n'est à craindre, le procédé se poursuit en une étape E4 décrite ci-après.

Dans le cas contraire, le calculateur 15 envoie à la borne de charge 20 une requête pour recharger la batterie de traction 12 aux premiers créneaux horaires disponibles, jusqu'à ce que le niveau de charge instantané $SOC_0$ atteigne le

seuil de niveau de charge $SOC_{min}$. Une fois ce seuil atteint, le procédé se poursuit sur l'étape E4.

Au cours de la seconde étape E4, le calculateur 15 acquiert l'heure de départ du véhicule électrique 10, c'est-à-dire l'heure à laquelle ce dernier devrait être déconnecté de la borne de charge 20.

Ici, le calculateur 15 acquiert non seulement cette heure de départ, mais également le niveau de charge cible $SOC_N$ que la batterie de traction 12 devra avoir atteint à cette heure là.

Pour cela, le calculateur 15 peut par exemple demander à l'usager, via une interface homme-machine dédiée, l'heure à laquelle il souhaite repartir et le lieu de destination souhaité.

Compte tenu du lieu de destination souhaité, le calculateur 15 sera en mesure de déterminer le niveau de charge cible $SOC_N$ que la batterie de traction 12 devra avoir atteint pour permettre à l'usager de parvenir à ce lieu de destination.

En variante, le calculateur 15 peut déterminer automatiquement l'heure à laquelle le véhicule repartira et le lieu de destination, par exemple en détectant que l'usager utilise systématiquement sa voiture électrique 10 pour se rendre à son travail tous les jours de la semaine.

Lors de cette seconde étape E4, le calculateur 15 reçoit par ailleurs de la borne de charge 20 les données relatives à l'évolution au cours du temps de la puissance électrique $P_{20}$ disponible sur la borne de charge 20 et du coût $c_{i,j}$ de l'électricité, ici sous la forme de la table Tab1 représentée sur la figure 2.

Une fois reçue par le calculateur 15, cette table est ici discrétisée par intervalle de temps constants (ici de 15 minutes), ci-après appelés créneaux horaires $T_i$ (où i est un entier variant de 1 à M, $T_1$ correspondant au premier créneau horaire de 15 minutes, $T_2$ au second...).

Comme le montre la figure 2, il est ici prévu que le coût $c_{i,j}$ de l'électricité puisse varier au sein d'un même créneau horaire, en fonction de la puissance électrique $P_{20}$ que l'on souhaite consommer pendant ce créneau horaire $T_i$.

Il est ici prévu que le coût puisse varier entre trois niveaux (coût réduit, coût intermédiaire et coût élevé), en fonction de la puissance électrique $P_{20}$ que l'on souhaite consommer.

On distingue donc ici au plus trois tranches de puissance par créneaux horaires, à savoir une tranche de puissance pour laquelle le coût $c_{i,j}$ de l'électricité est réduit, une tranche de puissance pour laquelle le coût $c_{i,j}$ de l'électricité est intermédiaire, et une tranche de puissance pour laquelle le coût $c_{i,j}$ de l'électricité est élevé.

L'indice j affecté au coût $c_{i,j}$ de l'électricité :

- pour la plus petite des tranches de puissance du créneau horaire $T_i$ considéré est égal à 1,
- pour l'éventuelle seconde tranche de puissance de ce créneau horaire $T_i$ est égal à 2, et
- pour l'éventuelle troisième tranche de puissance de ce créneau horaire $T_i$ est égal à 3.

A titre d'exemple, sur la figure 2, on observe qu'au cours du premier créneau horaire $T_1$, il est prévu :

- une première tranche de puissance limitée à 2 kW pour laquelle le $c_{1,1}$ de l'électricité est réduit,
- une seconde tranche de puissance limitée à 4 kW pour laquelle le $c_{1,2}$ de l'électricité est intermédiaire,
- une troisième tranche de puissance limitée à 10 kW pour laquelle le $c_{1,3}$ de l'électricité est élevé.

On observe par exemple aussi qu'au cours du quatrième créneau horaire $T_4$, il est prévu :

- une première tranche de puissance dont la limite maximum varie au cours du temps entre 4 et 2 kW, et pour laquelle le $c_{4,1}$ de l'électricité est intermédiaire,
- une seconde tranche de puissance dont la limite maximum varie au cours du temps entre 10 et 7 kW, et pour laquelle le $c_{4,2}$ de l'électricité est élevé.

Lors de cette étape de discrétisation des données, il est prévu de niveler (c'est-à-dire « écrêter ») les tranches de puissance de façon à ce que leur limite maximum reste constante au cours de chaque créneau horaire $T_i$.

Pour cela, comme le montre la figure 3, la valeur la plus petite de la limite maximum de puissance au sein de chaque créneau horaire $T_i$ est utilisée comme unique limite de puissance électrique durant ce créneau.

Dans le cas du créneau $T_3$, on observe ainsi que cette opération de nivellement élimine la première tranche de puissance pour laquelle le coût $c_{3,1}$ de l'électricité était réduit.

En outre, lors de cette opération de nivellement, le coût $c_{i,j}$ de l'électricité est redéfini (voir figure 3).

Pour cela, si aucune variation de coût $c_{i,j}$ n'intervient au sein du créneau horaire $T_i$ considéré, dans la tranche de puissance considérée, le nouveau coût $c_{i,j}'$ est défini selon la formule :

[Math 1]

$$c_{i,j}' = c_{i,j}$$

Si une variation de coût intervient au sein du créneau horaire $T_i$ considéré, dans la tranche de puissance considérée, le nouveau coût $c_{i,j}'$ est défini selon la formule :

$$[Math 2]$$

$$c_{i,j}' = (\max (c_{i,j})$$

dans le niveau de puissance considéré) pour chaque niveau de puissance électrique $P_{20}$ au sein du créneau horaire $T_i$ considéré.

Comme le montre bien la figure 3, une fois la table Tab1 discrétisée en une nouvelle table Tab2, on peut distinguer à chaque créneau horaire $T_i$ une ou plusieurs tranches de puissance, associées chacune à un coût $c_{i,j}$ de l'électricité invariable.

On considérera ici que le coût de l'énergie électrique consommée au cours d'un créneau horaire $T_i$ répond à la méthode de calcul dite des « coût marginaux », selon laquelle chaque tranche de puissance consommée doit être payée au prix qui lui est associé.

En d'autres termes, le coût d'une charge à 10 kW au cours du premier créneau horaire $T_1$ sera calculé au prorata des tranches de puissance électriques (on devra payer l'énergie correspondant à 2kW consommés pendant la durée du créneau horaire $T_1$ au coût $c_{1,1}'$, plus l'énergie correspondante à 4-2 = 2kW consommés pendant cette même durée au coût $c_{1,2}'$, plus l'énergie correspondante à 10-4=6kW consommés pendant cette même durée au coût $c_{1,3}'$).

A ce stade, si l'heure de départ est éloignée de plus de 24 heures, le procédé se poursuit en une étape E6 décrite ci-après.

Dans le cas contraire, les tables sont redéfinies pour éviter que des créneaux horaires postérieurs à cette heure de départ ne puissent être sélectionnés pour la charge de la voiture électrique 10.

Pour cela, le coût $c_{i,j}'$ de l'électricité pour chaque créneau horaire postérieur à l'heure de départ est redéfini et fixé à une valeur très élevée, telle que par exemple $10^{10}$ euros. En complément ou en variante, la puissance électrique $P_{20}$ disponible auprès de la borne de charge 20 pour chaque créneau horaire postérieur à l'heure de départ pourrait être redéfinie et fixée à une valeur nulle.

Le procédé se poursuit ensuite sur l'étape E6.

Cette troisième étape E6 consiste à répartir la table Tab2 sur davantage de colonnes, de façon à simplifier la mise en œuvre de l'algorithme qui suit.

Ainsi, comme le montre la figure 4, le calculateur 15 définit une nouvelle table Tab3 illustrant chaque tranche de puissance électrique sous la forme d'une colonne distincte.

Chaque colonne est donc associée à un coût $c_{i,j}"$ unique et à une puissance électrique $P_{i,j}$ unique (qui est susceptible d'être cédée au véhicule électrique 10 par la borne de charge 20 à ce coût $c_{i,j}"$).

Dans la suite de cet exposé, les colonnes considérées ne correspondent donc plus à des créneaux horaires. Elles seront donc ci-après appelées créneaux de puissance $T_{i,j}$.

On observe sur cette figure 4 que les noms des variables ont encore changés, du fait qu'on utilise la méthode de calcul des « coûts marginaux ». Ainsi, les coûts $c_{i,j}'$ sont ré-évalués, pour être ramené à un coût équivalent par créneau de puissance $T_{i,j}$ selon les formules mathématiques suivantes :

$$[Math. 3]$$

$$c_{i,1}" = c_{i,1}'$$

$$[Math. 4]$$

$$c_{i,2}" = [P_{i,1} . c_{i,1}' + (P_{i,2} - P_{i,1}) . c_{i,2}')] / \max (P_{i,1}, P_{i,2})$$

$$[Math. 5]$$

$$c_{i,3}" = [P_{i,1} . c_{i,1}' + (P_{i,2} - P_{i,1}) . c_{i,2}') + (P_{i,3} - P_{i,2}) . c_{i,3}') ] / \max (P_{i,1}, P_{i,2}, P_{i,3})$$

Le procédé se poursuit alors en une quatrième étape E8 consistant à sélectionner le plus proche créneau de puissance $T_{i,j}$ auquel il sera judicieux de charger la batterie de traction 12.

Pour cela, le calculateur 15 sélectionne le créneau de puissance $T_{i,j}$ le plus proche pour lequel le coût $c_{i,j}"$ de l'électricité est minimum (ce créneau de puissance étant naturellement associé à une puissance électrique $P_{i,j}$ non nulle).

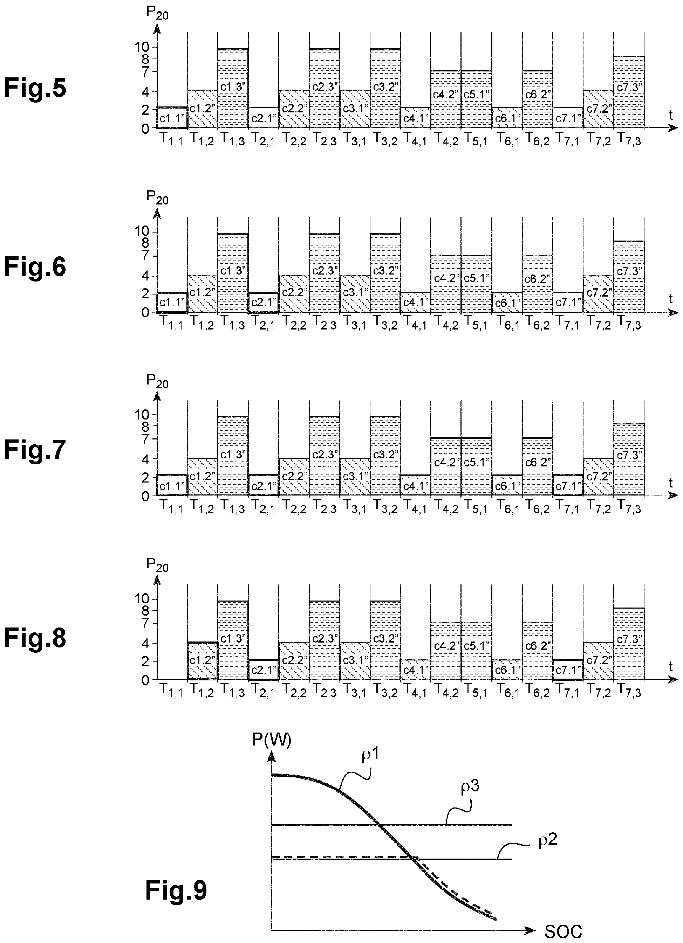

Dans l'exemple représenté sur la figure 5, il s'agit du premier créneau de puissance $T_{1,1}$.

Au cours d'une cinquième étape E10, le calculateur 15 met ensuite à jour la table Tab3 de façon à éviter que ce même créneau de puissance $T_{1,1}$ ne soit ultérieurement re-sélectionné.

Pour cela, à titre d'exemple, on pourrait prévoir de fixer le coût $c_{1,1}''$ de l'électricité lors de ce créneau de puissance $T_{1,1}$ à une valeur très élevée, et/ou de fixer la puissance électrique $P_{1,1}$ à une valeur nulle. Bien entendu, on pourrait également procéder autrement.

Les étapes suivantes vont alors consister à estimer le niveau de charge $SOC_2$ que devrait présenter la batterie de traction 12 à l'issue du créneau horaire $T_1$ correspondant, de façon à vérifier si, en chargeant la batterie de traction 12 pendant uniquement ce créneau horaire, l'usager pourra parvenir au lieu de destination souhaité.

Pour cela, au cours d'une sixième étape E12, le calculateur 15 estime la température $TC_1$ que présentera la batterie de traction 12 au moment du créneau horaire $T_1$ (le moment considéré pourra être le début du créneau horaire, ou encore tout autre moment de ce créneau tel que le milieu du créneau horaire).

Cette température $TC_1$ pourra être estimée à partir d'un modèle mathématique prédéterminé ou d'une cartographie prédéterminée sur banc d'essais.

Ici, le calculateur 15 calcule la température $TC_1$ à l'aide du modèle mathématique suivant :

[Math. 6]

$$MCp \cdot \frac{dTC_1}{dt} = R.I^2 + \frac{TCext - TC_1}{Rthext} + \frac{TCair - TC_1}{Rth(Qm)}$$

où :

- MCp, R, Rthext et Rth(Qm) sont des constantes thermiques dépendant de la chimie de la batterie de traction 12,
- TCext est la température ambiante,
- TCair est la température du système de chauffage/refroidissement de la batterie de traction 12 si celui-ci est activé, et
- I est l'intensité du courant délivré par la batterie de traction 12.

On notera, pour la suite de cet exposé, que cette équation pourrait s'écrire de façon plus générale sous la forme :

[Math. 7]

$$MCp \cdot \frac{dTC_i}{dt} = R.I^2 + \frac{TCext - TC_i}{Rthext} + \frac{TCair - TC_i}{Rth(Qm)}$$

Le calculateur 15 estime ensuite le niveau de charge $SOC_1$ que la batterie de traction 12 présentera au début du créneau horaire $T_1$.

On considérera ici que ce niveau de charge $SOC_1$ sera égal au niveau de charge instantané $SOC_0$. En variante, il pourrait être différent s'il était prévu d'utiliser la batterie de traction 12 pour alimenter les appareils auxiliaires 13 consommateurs de courant électrique avant de débuter la charge de la batterie.

Au cours d'une septième étape E14, le calculateur 15 calcule la puissance électrique admissible $P_{max12}$ par la batterie de traction 12 pendant le créneau horaire $T_1$.

Cette puissance électrique admissible $P_{max12,i}$ est déterminée en fonction de la température $TC_1$ et du niveau de charge $SOC_1$ estimés précédemment.

Comme le montre la courbe $\rho1$ sur la figure 9, cette puissance varie en effet en fonction du niveau de charge SOC de la batterie de traction 12, et elle est d'autant plus faible que le niveau de charge SOC est élevé.

La puissance électrique admissible $P_{max12}$ varie également en fonction de la température de la batterie de traction 12, cette puissance étant d'autant plus faible que la température TC est élevée.

Pour déterminer la puissance électrique admissible $P_{max12}$, le calculateur 15 stocke dans sa mémoire des tables de valeurs qui permettent, à partir de la température $TC_1$ et du niveau de charge $SOC_1$ estimés précédemment, de déterminer la puissance électrique admissible $P_{max12}$.

Au cours d'une huitième étape E16, le calculateur 15 cherche à déterminer la puissance électrique qui pourra effectivement être consommée pour charger la batterie de traction 12, compte tenu des contraintes propres aux composants électriques utilisés.

Pour cela, le calculateur 15 lit dans sa mémoire la puissance électrique maximum admissible $P_{max14}$ par le chargeur 14, qui est une constante prédéterminée représentée sur la figure 9 par la droite $\rho2$.

Il lit aussi la puissance électrique $P_{1,1}$ correspondant au créneau de puissance $T_{1,1}$ sélectionné, qui est représentée sur la figure 9 par la droite $\rho3$.

Le calculateur 15 sélectionne alors, parmi les trois puissances $P_{max12}$, $P_{max14}$, $P_{1,1}$, celle qui est la plus faible et qui forme donc le maillon limitant la puissance électrique $P_1$ à laquelle il sera effectivement possible de charger la batterie de traction 12.

Comme le montre la figure 9, ce maillon limitant ne sera pas le même selon le niveau de charge SOC de la batterie de traction 12 (et selon la température de la batterie).

La puissance électrique $P_1$ sélectionnée est alors associée au créneau horaire $T_1$ comme étant la puissance qui sera demandée à la borne de charge 20 pour charger la batterie de traction 12 (et éventuellement aussi pour alimenter les appareils auxiliaires 13) lors de ce premier créneau horaire $T_1$ (figure 5).

Le calculateur 15 détermine ensuite le nouveau niveau de charge $SOC_2$ que présentera la batterie d'accumulateurs 12 à l'issue du créneau horaire $T_1$.

La valeur de ce niveau de charge $SOC_2$ est déduite de la puissance électrique $P_1$ qui sera débitée par la borne de charge 20 pendant le créneau horaire $T_1$. Elle est déduite également de la puissance électrique consommée par les appareils auxiliaires 13 (laquelle puissance sera ci-après considérée nulle, par simplification).

Pour cela, au cours d'une neuvième étape E18, le calculateur 15 commence par déterminer l'énergie électrique $E_1$ stockée dans la batterie de traction 12 avant le créneau horaire $T_1$ sélectionné.

La valeur de l'énergie électrique $E_1$ sera ici déduite du niveau de charge instantané $SOC_0$, au moyen de la formule mathématique suivante :

$$[\text{Math. 8}]$$

$$E_1 = SOC_0 \cdot E_{max} \cdot SOH / 100 ,$$

où :

- $E_{max}$ est une constante prédéterminée enregistrée dans la mémoire du calculateur 15, qui correspond à l'énergie électrique maximale que la batterie de traction 12 peut stocker, et
- SOH est l'état de santé de la batterie de traction 12, qui est transmise au calculateur 15 par un calculateur tiers.

Puis, le calculateur 15 détermine l'énergie électrique $E_2$ qui sera stockée dans la batterie de traction 12 à l'issue du créneau horaire $T_1$ sélectionné, au moyen de la formule mathématique suivante :

$$[\text{Math. 9}]$$

$$E_2 = E_1 + P_1.\Delta t$$

avec $\Delta t$ ici égal à 15 minutes.

On notera, pour la suite de cet exposé, que cette équation pourrait s'écrire de façon plus générale sous la forme :

$$[\text{Math. 10}]$$

$$E_{i+1} = E_i + P_i.\Delta t$$

Au cours d'une dixième étape E20, le calculateur 15 en déduit le nouveau niveau de charge $SOC_2$ que présentera la batterie de traction 12 à l'issue du créneau horaire $T_1$ sélectionné, au moyen de la formule mathématique suivante :

$$[\text{Math. 11}]$$

$$SOC_2 = 100 \cdot E_2 / (E_{max}.SOH)$$

On notera, pour la suite de cet exposé, que cette équation pourrait s'écrire de façon plus générale sous la forme :

$$[\text{Math. 12}]$$

$$SOC_{i+1} = 100 \cdot E_{i+1} / (E_{max}.SOH)$$

Au cours d'une onzième étape E22, le calculateur 15 compare ce nouveau niveau de charge $SOC_2$ avec le niveau de charge cible $SOC_N$.

Si le nouveau niveau de charge $SOC_2$ est supérieur ou égal au niveau de charge cible $SOC_N$, le procédé se poursuit en une douzième étape E24 au cours de laquelle le calculateur 15 envoie à la borne de charge une requête réservant une puissance électrique $P_1$ pendant le créneau horaire $T_1$ sélectionné.

Dans le cas contraire, c'est-à-dire si ce créneau horaire $T_1$ ne permettra pas à lui seul d'atteindre le niveau de charge cible $SOC_N$, le procédé se répète à partir de la troisième étape E8, de façon à vérifier s'il est possible de charger suffisamment la batterie de traction 12 en sélectionnant non plus un seul créneau horaire associé à un coût $c_{1,1}$ réduit, mais deux créneaux horaires (figure 6) ou un seul créneau horaire associé à une tranche de puissance supérieure.

Comme le montrent les figures 5 à 8, le procédé pourra se répéter autant de fois que nécessaire, en sélectionnant autant de créneaux horaires supplémentaires qu'il faudra pour atteindre le niveau de charge cible $SOC_N$.

On peut alors décrire brièvement la manière selon laquelle le procédé se répète.

Lorsqu'il répète une première fois la quatrième étape E8, le calculateur 15 sélectionne le plus proche créneau de puissance $T_{i,j}$ pour lequel la puissance électrique $P_{i,j}$ est non nulle et pour lequel le coût $c_{i,j}$ de l'électricité est minimum. Les tables ayant été mises à jour, le créneau de puissance $T_{1,1}$ ne sera pas ici re-sélectionné. Ici, c'est le créneau de puissance $T_{2,1}$ qui est donc sélectionné.

Puis, lors de la cinquième étape E10, le calculateur 15 met à jour les tables de façon à éviter que ce nouveau créneau de puissance $T_{2,1}$ ne soit ultérieurement re-sélectionné.

Avant de poursuivre, le calculateur vérifie que le créneau horaire $T_2$ auquel appartient ce nouveau créneau de puissance $T_{2,1}$ n'a pas déjà été sélectionné et réservé pour la charge de la batterie de traction 12 à une puissance inférieure et pour un coût inférieur.

Ici, tel n'est pas le cas, si bien que le procédé se poursuit.

Les étapes suivantes vont alors consister à estimer le niveau de charge que devrait présenter la batterie de traction 12 à l'issue des deux créneaux horaires $T_1$, $T_2$ sélectionnés.

Pour cela, le calculateur considère tout d'abord celui des deux créneaux horaires $T_1$, $T_2$ sélectionnés qui est le plus proche de l'instant présent. Il s'agit ici du créneau horaire $T_1$.

Puis, au cours de la sixième étape E12, le calculateur 15 estime la température $TC_1$ que présentera la batterie de traction 12 au moment du créneau horaire $T_1$, à l'aide du modèle mathématique précité.

Le calculateur 15 estime également le niveau de charge $SOC_1$ que la batterie de traction 12 présentera au début du créneau horaire $T_1$. On considérera ici que ce niveau de charge $SOC_1$ sera égal au niveau de charge instantané $SOC_0$.

Au cours de la septième étape E14, le calculateur 15 calcule la puissance électrique admissible $P_{max12}$ par la batterie de traction 12 au cours de ce créneau horaire $T_1$, de la même manière qu'expliqué précédemment.

Au cours de la huitième étape E16, le calculateur 15 en déduit la puissance électrique $P_1$ à laquelle il sera possible de charger la batterie de traction 12 au cours de ce créneau horaire $T_1$.

Au cours des neuvième et dixième étapes E18, E20, le calculateur 15 détermine le niveau de charge $SOC_2$ que présentera la batterie d'accumulateurs 12 à l'issue du créneau horaire $T_1$.

Puis, le calculateur répète les étapes E12 à E20, en considérant cette fois l'autre créneau horaire $T_2$, de façon à en déduire le nouveau niveau de charge $SOC_3$ que présentera la batterie d'accumulateurs 12 à l'issue des deux créneaux horaires $T_1$, $T_2$.

Ceci étant fait, au cours de la onzième étape E22, le calculateur 15 compare ce nouveau niveau de charge $SOC_3$ avec le niveau de charge cible $SOC_N$.

Si le nouveau niveau de charge $SOC_3$ est supérieur ou égal au niveau de charge cible $SOC_N$, le calculateur 15 envoie à la borne de charge une requête pour réserver les puissances électriques $P_1$, $P_2$ sélectionnées au moment des deux créneaux horaires $T_1$, $T_2$ sélectionnés.

Dans le cas contraire, le procédé se répète à nouveau à partir de la quatrième étape E8.

Lors de cette troisième boucle, le créneau de puissance $T_{7,1}$ est sélectionné (figure 7), si bien que le procédé se répète exactement de la même façon que pour le créneau de puissance $T_{2,1}$.

A l'issue de cette troisième boucle, le nouveau niveau de charge $SOC_8$ est considéré encore une fois inférieur au niveau de charge cible $SOC_N$. Par conséquent, le procédé se répète à nouveau à partir de la quatrième étape E8.

Lors de la quatrième boucle, le créneau de puissance $T_{1,2}$ est sélectionné (figure 8). Cette fois, le procédé se répète alors de façon légèrement différente.

En effet, lors de la cinquième étape E10, le calculateur 15 vérifie si le créneau horaire $T_1$ auquel appartient ce nouveau créneau de puissance $T_{1,2}$ n'a pas déjà été sélectionné et réservé pour la charge de la batterie de traction 12 à une puissance inférieure et pour un coût inférieur.

Or, c'est bien le cas ici puisque le créneau horaire $T_1$ avait déjà été sélectionné au cours du premier pas de temps (pour le créneau de puissance $T_{1,1}$).

Dans ce cas, il est prévu alors de ne plus considérer le créneau de puissance T1,1 dans la suite des calculs, puisque la batterie de traction 12 ne sera chargée qu'une seule fois au moment de ce créneau horaire $T_1$, de façon à recevoir la puissance $P_{1,2}$ requise (ici 4 kW).

En d'autres termes, au cours de cette quatrième boucle, les étapes E12 à E20 ne vont être répétées que trois fois, en considérant tout d'abord le créneau horaire $T_1$, puis le créneau horaire $T_2$, et enfin le créneau horaire $T_7$, de façon à en déduire le nouveau niveau de charge $SOC_8$ que présentera la batterie d'accumulateurs 12 à l'issue de ces trois créneaux horaires $T_1$, $T_2$, $T_7$.

En résumé, la méthode proposée dans le présent exposé repose sur une estimation simplifiée de l'évolution du niveau de charge SOC de la batterie de traction 12, afin de réduire la puissance de calcul nécessaire pour mettre en œuvre le procédé.

Cette méthode peut donc être mise en œuvre très rapidement, avec des ressources de calcul limitées.

Il peut toutefois arriver que l'estimation soit légèrement erronée.

Pour éviter tout problème de charge, une fois que la charge a débuté, il est préférentiellement prévu de mettre en œuvre une opération de surveillance de l'évolution du niveau de charge SOC de la batterie de traction 12.

Pour cela, le calculateur relève régulièrement (par exemple toutes les 15 minutes) la valeur instantanée du niveau de charge SOC de la batterie de traction 12, puis il compare cette valeur avec celle qui était attendue.

Tant que l'écart entre ces deux valeurs reste inférieur à un seuil prédéterminé, aucune correction n'est entreprise.

En revanche, si cet écart dépasse le seuil, le calculateur réinitialise le procédé décrit ci-dessus, en émettant notamment auprès de la borne de charge une requête pour connaître la nouvelle table de coût de l'électricité et de puissance disponible auprès de la borne.

Lors de la mise en œuvre du procédé, un coefficient de correction K est ici appliqué au calcul de l'énergie stockée par la batterie de traction 12 pour chaque créneau horaire de charge.

L'équation « Math 10 » précitée s'écrira alors sous la forme :

[Math. 13]

$$E_{i+1} = E_i + K.P_i.\Delta t, \text{ avec } K = (SOC_{instantanné} - SOC_0) / (SOC_{attendu} - SOC_0)$$

La valeur de ce coefficient de correction est de préférence ajustée en fonction de la vitesse avec laquelle la valeur instantanée du niveau de charge a dévié de la valeur attendue du niveau de charge.

Une fois le procédé achevé, le calculateur 15 envoie une nouvelle requête à la borne de charge 20 pour réserver de nouveaux créneaux horaires : on parle de « re-négociation »

La présente invention n'est nullement limitée au mode de réalisation décrit et représenté, mais l'homme du métier saura y apporter toute variante conforme à l'invention.

Elle s'applique également lorsque le coût de l'énergie électrique consommée répondra à la méthode de calcul dite des « coûts nivelés par la puissance supérieure », selon laquelle l'ensemble de la puissance électrique consommée au cours d'un créneau horaire doit être payé au coût le plus élevé.

En d'autres termes, avec cette méthode, le coût d'une charge de 10 kW au cours du premier créneau horaire $T_1$ sera calculé non plus au prorata des tranches de puissance électriques, mais en payant l'énergie consommée ($10\,kW * T_1$) au coût $c_{1,3}"$.

Dans cette variante, le procédé est mis en œuvre de la même façon que précité, à la différence près que durant la troisième étape E6, dont on rappelle qu'elle consiste à répartir la table Tab2 sur davantage de créneaux, les coûts $c_{i,j}'$ ne sont pas ré-évalués. Les formules mathématiques 3 à 5 précitées peuvent alors être ré-écrites sous la forme :

[Math. 14]

$$c_{i,1}" = c_{i,1}'$$

[Math. 15]

$$c_{i,2}" = c_{i,2}'$$

[Math. 16]

$$c_{i,3}" = c_{i,3}'$$

## Revendications

1.  Méthode de charge d'une batterie d'accumulateurs (12) équipant un véhicule automobile (10) qui est connecté électriquement à une borne de charge (20),

ladite méthode comportant une étape d'acquisition de données relatives à l'évolution au cours du temps de la puissance électrique disponible ($P_{20}$) sur la borne de charge (20) et du coût ($c_{i,j}$) de l'électricité, lesdites données étant discrétisées par créneaux horaires ($T_i$) dans une partie au moins desquels il est prévu plusieurs tranches de puissance associées chacune à un coût de l'électricité distinct,

**caractérisée en ce que** la méthode comporte les étapes suivantes:

- la sélection d'une tranche de puissance d'un créneau horaire (c1.1), qui est associée à un coût de l'électricité minimum, si le coût de l'électricité est minimum pour plusieurs tranches de puissance appartenant à plusieurs créneaux horaires (T1.1, T2.2, T7.1) différents, la tranche de puissance sélectionnée est celle appartenant au créneau horaire (T1.1) le plus immédiat, et des étapes supplémentaires, aptes à être exécutées en boucle, à pas de temps successifs :

- d'estimation d'un niveau de charge (SOC) que présentera la batterie d'accumulateurs (12) à l'issue de sa charge, en fonction de chaque tranche de puissance sélectionnée,
- de comparaison du niveau de charge (SOC) avec un niveau de charge cible ($SOC_N$) puis,
- si le niveau de charge (SOC) est supérieur ou égal au niveau de charge cible ($SOC_N$), il est prévu de charger la batterie d'accumulateurs (12) au moyen de la borne de charge (20) en envoyant à la borne de charge une requête pour réserver chaque tranche de puissance sélectionnée, ou
- si le niveau de charge (SOC) est inférieur au niveau de charge cible ($SOC_N$), il est prévu :

- d'ajouter à la sélection une tranche de puissance d'un créneau horaire (c2.1, c7.1, c1.2), qui est associée à un coût de l'électricité minimum et qui n'a pas été déjà sélectionnée à un pas de temps précédent, si le coût de l'électricité est minimum pour plusieurs tranches de puissance appartenant à plusieurs créneaux horaires (T2.1, T7.1) différents, la tranche de puissance sélectionnée est celle appartenant au créneau horaire (T2.1) le plus immédiat,
- si pour le créneau horaire (T1) correspondant à la tranche de puissance qui vient d'être ajoutée à la sélection (c1.2), une autre tranche de puissance avait déjà été sélectionnée (c1.1), alors une étape de désélection de cette autre tranche de puissance (c1.1) est effectuée,
- d'exécuter lesdites étapes supplémentaires au cours d'un nouveau pas de temps.

2. Méthode de charge selon la revendication précédente, dans laquelle, au cours de l'étape d'estimation, il est prévu :

- d'évaluer une température ($TC_i$) que présentera la batterie d'accumulateurs (12) au moment du créneau horaire ($T_i$) et d'un niveau de charge ($SOC_i$) que présentera la batterie d'accumulateurs (12) au début du créneau horaire ($T_i$),
- de déterminer la puissance électrique ($P_i$) que la borne de charge (20) pourrait transmettre à la batterie d'accumulateurs (12) pendant le créneau horaire ($T_i$), en fonction de la température ($TC_i$) et du niveau de charge ($SOC_i$) évalués, et
- d'en déduire une estimation du niveau de charge (SOC).

3. Méthode de charge selon l'une des revendications précédentes, dans laquelle l'étape d'acquisition comporte une sous-étape de réception desdites données, et une sous-étape de discrétisation desdites données par créneaux horaires ($T_i$) de durées prédéterminées, en uniformisant la valeur du coût ($c_{i,j}$) de l'électricité dans chaque tranche de puissance de chaque créneau horaire.

4. Méthode de charge selon la revendication précédente, dans laquelle, la durée de chaque créneau horaire ($T_i$) est comprise entre 1 et 30 minutes, préférentiellement entre 10 et 20 minutes.

5. Méthode de charge selon l'une des revendications précédentes, dans laquelle, au cours de l'étape d'acquisition, on acquiert une heure de départ à laquelle il est prévu que le véhicule automobile (10) soit déconnecté de la borne de charge (20) et, à l'étape de sélection, seules sont considérées les tranches de puissance situées dans les créneaux horaires antérieurs à l'heure de départ.

6. Méthode de charge selon l'une des revendications précédentes, dans laquelle, à l'étape de sélection, si le coût de l'électricité est minimum pour plusieurs tranches de puissance appartenant à plusieurs créneaux horaires ($T_i$) différents, la tranche de puissance sélectionnée est celle appartenant au créneau horaire ($T_i$) le plus immédiat.

**7.** Méthode de charge selon l'une des revendications précédentes, dans laquelle, avant l'étape de sélection, il est prévu :

- de déterminer le niveau de charge instantané ($SOC_0$) de la batterie d'accumulateurs (12),
- de comparer le niveau de charge instantané ($SOC_0$) avec un seuil de niveau de charge ($SOC_{min}$), et, si le niveau de charge instantané ($SOC_0$) est inférieur au seuil de niveau de charge ($SOC_{min}$),
- de recharger la batterie d'accumulateurs (12) au premier créneau horaire ($T_i$) pour lequel la puissance électrique disponible auprès de la borne de charge (20) est non nulle.

**8.** Méthode de charge selon l'une des revendications précédentes, dans laquelle, lors de la charge de la batterie d'accumulateurs (12) au moyen de la borne de charge (20), il est prévu au moins une fois de :

- acquérir la valeur instantanée du niveau de charge (SOC) de la batterie d'accumulateurs (12),
- déterminer l'écart entre ladite valeur instantanée et la valeur attendue du niveau de charge (SOC) de la batterie d'accumulateurs (12), ladite valeur attendue étant déduite de l'étape d'estimation, et, si l'écart dépasse un seuil prédéterminé,
- réinitialiser toute la méthode de charge.

**9.** Méthode de charge selon la revendication précédente, dans laquelle, lorsque toute la méthode de charge est réinitialisée, l'étape d'estimation du niveau de charge (SOC) que présentera la batterie d'accumulateurs (12) à l'issue de sa charge est réalisée en utilisant un coefficient correcteur.

**10.** Véhicule automobile (10) comportant au moins un moteur électrique (11) de traction ou propulsion, et une batterie d'accumulateurs (12) adaptée à alimenter en courant électrique chaque moteur électrique (11), **caractérisé en ce qu'**il comporte un calculateur (15) programmé pour mettre en œuvre une méthode de charge conforme à l'une des revendications précédentes.

**Patentansprüche**

**1.** Verfahren zum Laden einer Akkumulatorenbatterie (12), mit der ein Kraftfahrzeug (10) ausgerüstet ist, das mit einer Ladestation (20) elektrisch verbunden ist,

wobei das Verfahren einen Schritt des Erfassens von Daten über die zeitliche Entwicklung der an der Ladestation (20) verfügbaren elektrischen Leistung ($P_{20}$) und der Stromkosten ($c_{i,j}$) umfasst, wobei die Daten durch Zeitfenster ($T_i$) diskretisiert werden, in mindestens einem Teil derer mehrere Leistungsabschnitte vorgesehen sind, die jeweils mit unterschiedlichen Stromkosten assoziiert sind,
**dadurch gekennzeichnet, dass** das Verfahren die folgenden Schritte umfasst:

- Auswählen eines Leistungsabschnitts eines Zeitfensters (c1.1), der mit minimalen Stromkosten assoziiert ist, wobei, wenn die Stromkosten für mehrere Leistungsabschnitte, die zu mehreren unterschiedlichen Zeitfenstern (T1.1, T2.2, T7.1) gehören, minimal sind, der ausgewählte Leistungsabschnitt derjenige ist, der zu dem am nächsten liegenden Zeitfenster (T1.1) gehört, und folgende zusätzliche Schritte, die dazu angepasst sind, in Schleife und in aufeinanderfolgenden Zeitintervallen ausgeführt zu werden:

- Schätzen eines Ladezustands (SOC), den die Akkumulatorenbatterie (12) nach Abschluss ihres Ladevorgangs aufweisen wird, in Abhängigkeit von jedem ausgewählten Leistungsabschnitt,
- Vergleichen des Ladezustands (SOC) mit einem Zielladezustand ($SOC_N$) und dann,
- wenn der Ladezustand (SOC) größer als oder gleich dem Zielladezustand ($SOC_N$) ist, Vorsehen, die Akkumulatorenbatterie (12) mit der Ladestation (20) zu laden, indem eine Anfrage zur Reservierung jedes ausgewählten Ladeabschnitts an die Ladestation gesendet wird, oder
- wenn der Ladezustand (SOC) kleiner als der Zielladezustand ($SOC_N$) ist, Vorsehen von Folgendem:

- Hinzufügen, zu der Auswahl, eines Leistungsabschnitts eines Zeitfensters (c2.1, c7.1, c1.2), der mit minimalen Stromkosten assoziiert ist und der in einem vorhergehenden Zeitintervall noch nicht ausgewählt wurde, wobei, wenn die Stromkosten für mehrere Leistungsabschnitte, die zu mehreren unterschiedlichen Zeitfenstern (T2.1, T7.1) gehören, minimal sind, der ausgewählte Leistungsabschnitt derjenige ist, der zu dem am nächsten liegenden Zeitfenster (T2.1) gehört,
- wobei, wenn für das Zeitfenster (T1), das dem zu der Auswahl gerade hinzugefügten Leistungsabschnitt (c1.2) entspricht, ein anderer Leistungsabschnitt bereits ausgewählt wurde (c1.1), dann ein Schritt des Abwählens dieses anderen Leistungsabschnitts (c1.1) durchgeführt wird,
- Ausführen der zusätzlichen Schritte während eines neuen Zeitintervalls.

2. Ladeverfahren nach dem vorhergehenden Anspruch, wobei während des Schritts des Schätzens Folgendes vorgesehen ist:

- Einschätzen einer Temperatur ($TC_i$), die die Akkumulatorenbatterie (12) zum Zeitpunkt des Zeitfensters ($T_i$) aufweisen wird, und eines Ladezustands ($SOC_i$), den die Akkumulatorenbatterie (12) zu Beginn des Zeitfensters ($T_i$) aufweisen wird,
- Bestimmen der elektrischen Leistung ($P_i$), die die Ladestation (20) während des Zeitfensters ($T_i$) an die Akkumulatorenbatterie (12) übertragen könnte, in Abhängigkeit von der eingeschätzten Temperatur ($TC_i$) und dem eingeschätzten Ladezustand ($SOC_i$) und
- daraus Ableiten einer Schätzung des Ladezustands (SOC).

3. Ladeverfahren nach einem der vorhergehenden Ansprüche, wobei der Schritt des Erfassens einen Teilschritt des Empfangens der Daten und einen Teilschritt des Diskretisierens der Daten durch Zeitfenster ($T_i$) mit vorbestimmten Dauern umfasst, indem der Wert der Stromkosten ($c_{i,j}$) in jedem Leistungsabschnitt jedes Zeitfensters vereinheitlicht wird.

4. Ladeverfahren nach dem vorhergehenden Anspruch, wobei die Dauer jedes Zeitfensters ($T_i$) zwischen 1 und 30 Minuten, vorzugsweise zwischen 10 und 20 Minuten, beträgt.

5. Ladeverfahren nach einem der vorhergehenden Ansprüche, wobei während des Schritts des Erfassens eine Abfahrtszeit erfasst wird, zu der das Trennen des Kraftfahrzeugs (10) von der Ladestation (20) vorgesehen ist, und während des Schritts des Auswählens nur die Leistungsabschnitte betrachtet werden, die sich in den Zeitfenstern vor der Abfahrtszeit befinden.

6. Ladeverfahren nach einem der vorhergehenden Ansprüche, wobei während des Schritts des Auswählens, wenn die Stromkosten für mehrere Leistungsabschnitte, die zu mehreren unterschiedlichen Zeitfenstern ($T_i$) gehören, minimal sind, der ausgewählte Leistungsabschnitt derjenige ist, der zu dem am nächsten liegenden Zeitfenster ($T_i$) gehört.

7. Ladeverfahren nach einem der vorhergehenden Ansprüche, wobei vor dem Schritt des Auswählens Folgendes vorgesehen ist:

- Bestimmen des momentanen Ladezustands ($SOC_0$) der Akkumulatorenbatterie (12),
- Vergleichen des momentanen Ladezustands ($SOC_0$) mit einem Schwellenladezustand ($SOC_{min}$) und, wenn der momentane Ladezustand ($SOC_0$) kleiner als der Schwellenladezustand ($SOC_{min}$) ist,
- Wiederaufladen der Akkumulatorenbatterie (12) in dem ersten Zeitfenster ($T_i$), in dem die an der Ladestation (20) verfügbare elektrische Leistung nicht null ist.

8. Ladeverfahren nach einem der vorhergehenden Ansprüche, wobei während des Ladens der Akkumulatorenbatterie (12) mit der Ladestation (20) mindestens einmal Folgendes vorgesehen ist:

- Erfassen des Momentanwerts des Ladezustands (SOC) der Akkumulatorenbatterie (12),
- Bestimmen der Abweichung zwischen dem Momentanwert und dem erwarteten Wert des Ladezustands (SOC) der Akkumulatorenbatterie (12), wobei der erwartete Wert aus dem Schritt des Schätzens abgeleitet wird, und, wenn die Abweichung eine vorbestimmte Schwelle überschreitet,
- Zurücksetzen des gesamten Ladeverfahrens.

9. Ladeverfahren nach dem vorhergehenden Anspruch, wobei, wenn das gesamte Ladeverfahren zurückgesetzt wird, der Schritt des Schätzens des Ladezustands (SOC), den die Akkumulatorenbatterie (12) nach Abschluss ihres Ladevorgangs aufweisen wird, unter Verwendung eines Korrekturkoeffizienten durchgeführt wird.

10. Kraftfahrzeug (10), das mindestens einen Traktions-oder Antriebselektromotor (11) und eine Akkumulatorenbatterie (12), die dazu angepasst ist, jeden Elektromotor (11) mit elektrischem Strom zu versorgen, umfasst, **dadurch gekennzeichnet, dass** es eine Recheneinheit (15) umfasst, die dazu programmiert ist, ein Ladeverfahren nach einem der vorhergehenden Ansprüche umzusetzen.

**Claims**

1.  Method for charging a battery of accumulators (12) equipping an automobile vehicle (10) which is electrically connected to a charging terminal (20),

    said method comprising a step for acquiring data relating to the variation over time of the electrical power available ($P_{20}$) on the charging terminal (20) and of the cost ($c_{i,j}$) of electricity, said data being discretized by time slots ($T_i$) in one part at least of which several power tranches are provided each associated with a distinct cost of electricity, **characterized in that** the method comprises the following steps:

    - selecting a power tranche from a time slot (c1.1), which is associated with a minimum cost of electricity, if the cost of electricity is minimum for several power tranches belonging to several different time slots (T1.1, T2.2, T7.1), the power tranche selected is that belonging to the most immediate time slot (T1.1), and additional steps, able to be executed in a loop, at successive time periods:

    - estimating a level of charge (SOC) that the battery of accumulators (12) will have at the end of its charging process, as a function of each power tranche selected,
    - comparing the level of charge (SOC) with a target level of charge ($SOC_N$) then,
    - if the level of charge (SOC) is greater than or equal to the target level of charge ($SOC_N$), making provision to charge the battery of accumulators (12) by means of the charging terminal (20) by sending to the charging terminal a request for booking each selected power tranche, or
    - if the level of charge (SOC) is less than the target level of charge ($SOC_N$), making provision:

    - to add, to the selection, a power tranche from a time slot (c2.1, c7.1, c1.2), which is associated with a minimum cost of electricity and which has not already been selected in a preceding time period, if the cost of electricity is minimum for several power tranches belonging to several different time slots (T2.1, T7.1), the power tranche selected is that belonging to the most immediate time slot (T2.1),
    - if, for the time slot (T1) corresponding to the power tranche that has just been added to the selection (c1.2), another power tranche had already been selected (c1.1), then to carry out a step of deselecting this other power tranche (c1.1),
    - to execute said additional steps during a new time period.

2.  Charging method according to the preceding claim, in which, during the estimation step, provision is made to:

    - evaluate a temperature ($TC_i$) that the battery of accumulators (12) will have during the time slot ($T_i$) and a level of charge ($SOC_i$) that the battery of accumulators (12) will have at the start of the time slot ($T_i$),
    - determine the electrical power ($P_i$) that the charging terminal (20) could transmit to the battery of accumulators (12) during the time slot ($T_i$), as a function of the temperature ($TC_i$) and of the level of charge ($SOC_i$) evaluated, and
    - deduce from this an estimation of the level of charge (SOC) .

3.  Charging method according to one of the preceding claims, in which the acquisition step comprises a sub-step for receiving said data, and a sub-step for discretizing said data by time slots ($T_i$) of predetermined duration, while rendering uniform the value of the cost ($c_{i,j}$) of the electricity within each power tranche of each time slot.

4.  Charging method according to the preceding claim, in which the duration of each time slot ($T_i$) is in the range between 1 and 30 minutes, preferably between 10 and 20 minutes.

5.  Charging method according to one of the preceding claims, in which, during the acquisition step, a departure time is acquired at which it is planned for the automobile vehicle (10) to be disconnected from the charging terminal (20) and, at the selection step, only the power tranches situated in the time slots prior to the departure time are considered.

6.  Charging method according to one of the preceding claims, in which, at the selection step, if the cost of electricity is minimum for several power tranches belonging to several different time slots ($T_i$), the power tranche selected is that belonging to the most immediate time slot ($T_i$).

7.  Charging method according to one of the preceding claims, in which, prior to the selection step, provision is made:

    - to determine the instantaneous level of charge ($SOC_0$) of the battery of accumulators (12),

- to compare the instantaneous level of charge ($SOC_0$) with a threshold level of charge ($SOC_{min}$), and, if the instantaneous level of charge ($SOC_0$) is less than the threshold level of charge ($SOC_{min}$),
- to recharge the battery of accumulators (12) at the first time slot ($T_i$) for which the electrical power available at the charging terminal (20) is non-zero.

8. Charging method according to one of the preceding claims, in which, during the charging of the battery of accumulators (12) by means of the charging terminal (20), provision is made at least once:

   - to acquire the instantaneous value of the level of charge (SOC) of the battery of accumulators (12),
   - to determine the difference between said instantaneous value and the expected value of the level of charge (SOC) of the battery of accumulators (12), said expected value being deduced from the estimation step, and, if the difference exceeds a predetermined threshold,
   - to reset the entire charging method.

9. Charging method according to the preceding claim, in which, when the entire charging method is reset, the step for estimating the level of charge (SOC) that the battery of accumulators (12) will have at the end of its charging process is implemented using a corrector coefficient.

10. Automobile vehicle (10) comprising at least one drivetrain or powertrain electric motor (11), and a battery of accumulators (12) designed to supply each electric motor (11) with electric current, **characterized in that** it comprises a computer (15) programmed to implement a charging method according to one of the preceding claims.

**Fig.1**

**Fig.2**

**Fig.3**

**Fig.4**

Fig.5

Fig.6

Fig.7

Fig.8

Fig.9

# Fig.10

**EP 3 908 478 B1**

## RÉFÉRENCES CITÉES DANS LA DESCRIPTION

**Documents brevets cités dans la description**

- CN 103020445
- US 2017259683 A1
- US 2013278225 A1
- US 2013307466 A